# EUROPEAN PATENT SPECIFICATION

(11) **EP 0 726 607 B1**
(45) Date of publication and mention of the grant of the patent: **24.06.1998**
(21) Application number: 96100013.0
(22) Date of filing: 02.01.1996
(51) Int. Cl.: H01M 4/62, H01M 4/24, C08L 1/26, C08L 3/04

(54) **Thickener for electrode paste and electrode paste composition for alkaline storage battery**
Elektrodenpaste für alkalische Batterien, enthaltend ein wasser-absorbierendes Verdickungsmittel
Pâte d'électrode pour accumulateurs alcalins, contenant d'agents épaississants

(30) Priority: 09.02.1995 JP 46471/95
(43) Date of publication of application: 14.08.1996
(73) Proprietor: SANYO CHEMICAL INDUSTRIES, LTD., Kyoto-fu, 605 (JP)
(72) Inventor: Fujiura, Yoji, Kyoto-fu 607 (JP); Zenitani, Yukio, Kitakatsuragi-gun, Nara-ken 636 (JP); Koike, Masami, Hirakata-shi, Osaka-fu 573 (JP)
(74) Representative: Kador & Partner

(56) References cited:
- EP-A- 0 284 063
- EP-A- 0 574 019
- US-A- 5 212 622
- DATABASE WPI Section Ch, Week 8304 Derwent Publications Ltd., London, GB; Class A85, AN 83-08594K & JP-A-57 202 658 ( MATSUSHITA ELEC IND KK) , 11 December 1982
- DATABASE WPI Section Ch, Week 9506 Derwent Publications Ltd., London, GB; Class A18, AN 95-041419 & JP-A-06 322 178 ( SANYO CHEM IND LTD) , 22 November 1994
- DATABASE WPI Section Ch, Week 9520 Derwent Publications Ltd., London, GB; Class A14, AN 95-149660 & JP-A-07 053 884 ( MITSUBISHI PETROCHEMICAL CO LTD) , 28 February 1995
- DATABASE WPI Section Ch, Week 8951 Derwent Publications Ltd., London, GB; Class A85, AN 89-373896 & JP-A-01 279 562 ( SHARP KK) , 9 November 1989
- PATENT ABSTRACTS OF JAPAN vol. 011 no. 027 (E-474) ,27 January 1987 & JP-A-61 198561 (HITACHI MAXELL LTD) 2 September 1986,

## Description

The present invention relates to a thickener used as a component in the production of an electrode paste as the positive electrode, such as nickel positive electrode, or the negative electrode, such as cadmium negative electrode and hydrogen-storing alloy negative electrode, in alkaline storage batteries such as nickel-cadmium and nickel-hydrogen batteries; and to a composition for preparing an electrode paste and an electrode paste using the thickener.

Conventional electrodes in alkaline storage batteries are classified into two kinds, namely sintered type and non-sintered type (paste type), according to the production process. Recently, the paste type electrodes are more commonly used owing to their easier production process. A paste type nickel positive electrode is commonly produced by mixing an active material such as powder of nickel hydroxide, and a conductive agent such as carbon black, nickel and cobalt metal powders; adding a fluorine resin thereto so as to firmly bond the active material; further adding an aqueous solution of a thickener to produce a paste; applying the paste to a metal porous substrate; drying the substrate, and pressure molding. Examples of conventional thickeners include water-soluble polymers such as carboxymethyl cellulose (CMC), polyvinyl alcohol and sodium polyacrylate. A paste type negative electrode is often produced similarly, except that active materials for a negative electrode such as cadmium powders and hydrogen-storing alloy powders are used, by preparing a paste of an active material, a conductive agent, a fluorine resin and an aqueous solution of a thickener, then applying the paste to a metal porous substrate, drying the substrate, and pressure molding.

However, the following problems ① to ③ have been encountered when a water-soluble polymer is used as the thickener in the production of an electrode paste.
① Since the active material or the conductive agent in the paste tends to sediment, uniform application of the paste to the metal porous substrate is difficult; in addition, the paste once applied to the metal porous substrate tends to sag. Moreover, if the amount of the water-soluble polymer is increased to prevent the sedimentation or sagging, since the stringiness is intensified to deteriorate the applicability to the metal porous substrate as well as to diminish the activity by covering the surface of the active material with the thickener, a deleterious effect on battery characteristics results. "Stringiness" herein denotes a phenomenon in applying a paste to a substrate, namely roping of the paste between the substrate and the coating appliance at the time of removing the coating appliance from the substrate.
② Since undissolved powder lumps tend to be formed when dissolving the water-soluble polymer in the water for thickening, dissolving takes a long time.
③ The water-soluble polymer elutes from the obtained electrode by contacting the electrolyte (strong alkali solution) and may eventually cover the entire surface of the active material, thus diminishing its activity. With further elution of the water-soluble polymer, the active material will fall off to adversely affect battery characteristics.

US-A-5,212,622 discloses a high surface area electrode formed from filler particles having a high surface to volume ratio in a binder able to support the conduction of ions. The binder may be a hydrophilic polymer and hydrogel able to swell to incorporate a solvent and its dissolved ionic material while retaining its mechanical strength. The swelling may be regulated by control of the degree of cross-linking of the binder material.

An object of the present invention is to provide a thickener without liability of forming undissolved lumps in adding water for thickening, capable of thickening in a short time, enabling the uniform application without the sedimentation of the active material or the conductive agent even when the adding amount is small, having good applicability without stringiness nor sagging after application, and further providing an electrode not liable to elute to electrolyte; and to provide a composition for preparing an electrode paste for alkaline storage batteries using the thickener and the electrode paste. That is, thickeners used in the present invention for electrode pastes for alkaline storage batteries comprise water-insoluble water-absorbent resins.

According to the present invention there is proposed the use, as a thickener for an electrode paste for an alkaline storage battery, of a water-insoluble water-absorbent resin in the form of a fine powder having an average particle size of 200 µm or less and a viscosity, determined on an aqueous dispersion of 1 weight % concentration at 30°C, of at least 20,000 cps, preferably from 20,000 to 100,000 cps. The resin advantageously has neutralized carboxylic groups, the proportion of monomers having a neutralized carboxylic group with respect to the total monomers comprising the resin preferably being at least 40 mole %, more preferably from 50 to 80 mole %.

Further according to the invention a composition for an electrode paste for an alkaline storage battery comprises an active material; a conductive agent; fluorine resin; and a thickener comprising a water-insoluble water-absorbent resin as aforesaid.

According to a preferred embodiment of the composition, the proportions of conductive agent, fluorine resin and thickener, based on 100 parts of an active material, are: 0.05 to 7 weight parts of conductive agent, 0.2 to 10 weight parts of fluorine resin and 0.01 to 2 weight parts of the thickener.

The invention also comprehends an electrode paste for an alkaline storage battery comprising a composition as aforesaid. The proportion of water based on 100 weight parts of an active material is advantageously 1 to 200 weight parts, and the proportion of a thickener with respect to water may be from 0.1 to 2.0 weight %, preferably from 0.1 to 1.0 weight %. The paste according to has a viscosity of 10,000 cps to 40,000 cps, and may be applied on a porous substrate which is a part of an electrode material of the alkaline storage battery.

Water-insoluble water-absorbent resins used in the present invention are not particularly limited as long as the resin swells by water absorption, is insoluble in water and exhibits a particle size and viscosity as defined in claim 1. Those having a carboxylic acid salt group are preferable, such as (1) water-insoluble water-absorbent resins obtained by polymerizing a vinyl monomer having a carboxylic acid group, a copolymerizable crosslinking agent and optionally starch and/or another vinyl monomer, followed by neutralizing with an alkaline compound to effect at least partial neutralization of carboxylic acid groups, (2) water-insoluble water-absorbent resins obtained by polymerizing a vinyl monomer having a carboxylic acid salt group alone or a carboxylic acid group and a carboxylic acid salt group, a copolymerizable crosslinking agent and optionally starch and/or another vinyl monomer, (3) water-absorbent water-insoluble resins obtained by polymerizing a vinyl monomer which forms a carboxylic acid salt group by hydrolysis, and optionally a copolymerizable crosslinking agent and another vinyl monomer, followed by hydrolyzing with an alkaline compound to have a partially carboxylic acid salt group, and (4) water-insoluble water-absorbent resins obtained by crosslinking a water-soluble polymer having a carboxylic acid salt group after polymerization.

Examples of such vinyl monomers having a carboxylic acid group include unsaturated mono- or poly- carboxylic acid such as (meth)acrylic acid, crotonic acid, sorbic acid, maleic acid, itaconic acid and cinnamic acid, and anhydrides thereof such as maleic anhydride. "(Meth)acrylic ..." herein denotes "acrylic ..." and/or "methacrylic ...".

Examples of vinyl monomers having a carboxylic acid salt group include alkali metal salts (such as salts of sodium, potassium or lithium), alkaline earth metal salts (such as salts of calcium or magnesium), ammonium salts or amine salts (such as salts of alkyl amines including methyl amine and trimethyl amine; salts of alkanol amines including triethanol amine and diethanol amine) of the above mentioned vinyl monomers having a carboxylic acid group, or a combination of two or more. Among these examples, sodium salts or potassium salts are preferable.

Examples of vinyl monomers which may acquire a carboxylic acid salt group by hydrolysis include methyl (meth)acrylate, ethyl (meth)acrylate, 2-ethylhexyl (meth)acrylate, vinyl acetate and (meth)acrylonitrile.

Examples of copolymerizable crosslinking agents include ① compounds having at least two polymerized double bonds and ② compounds having at least one polymerizable double bond and at least one group reactive with a carboxylic acid salt group.

Examples of ① compounds include N,N'-methylene bis(meth)acrylamide; di- or tri- (meth)acrylate of polyols such as ethylene glycol, trimethylol propane, glycerol, polyoxyethylene glycol and polyoxypropylene glycol; divinyl benzene, divinyl toluene, tetraallyloxyethane and diallyl adipate.

Examples of ② compounds include ethylenically unsaturated compounds having a group reactive with a carboxyl group such as a hydroxyl group, an epoxy group, an amino group and a quaternary ammonium salt group. Suitable unsaturated compounds having a hydroxyl group include N-methylol (meth)acrylamide; suitable unsaturated compounds having an epoxy group include glycidyl (meth)acrylate; and suitable unsaturated compounds having a quaternary ammonium salt group include (meth)acryloyl oxyethyl trimethyl ammonium chloride and chlorides of trimethyl aminopropyl (meth)acrylamide.

Among these copolymerizable crosslinking agents, the ① compounds are preferable, in particular N,N'-methylene bisacrylamide, ethylene glycol diacrylate, trimethylol propane triacrylate and tetraallyloxy ethane. Examples of other vinyl monomers include hydroxyethyl (meth)acrylate, hydroxypropyl (meth)acrylate, (meth)acrylamide, vinyl acetate and vinyl pyrrolidone.

Examples of alkaline compounds include hydroxides of alkali metals (such as sodium hydroxide, potassium hydroxide and lithium hydroxide), carbonates of alkali metals (such as sodium carbonate and sodium bicarbonate), amine compounds, ammonium compounds and combinations of two or more of the above. Among these examples, sodium hydroxide, potassium hydroxide and sodium bicarbonate are preferable.

Concrete examples of the water-insoluble water-absorbent resins include partially neutralized crosslinked graft copolymers of starch-acrylic acid, partially neutralized crosslinked polyacrylic acid, saponified copolymers of acrylate-vinyl acetate, partially neutralized crosslinked copolymers of isobutylene-maleic anhydride, alkaline metal salts of crosslinked carboxymethyl cellulose and partially neutralized self-crosslinked polyacrylic acid salts.

The ratio of monomers having a carboxylic acid salt group to total monomers constituting the water-insoluble water-absorbent resin in the present invention is, generally 40 mole % or more, preferably 50 to 80 mole %. It is preferable to have the percentage content of 40 % or more since the viscosity of the water-insoluble water-absorbent resin obtained will not deteriorate, providing good operativity in production.

The weight ratio of copolymerizable crosslinking agent based to the sum of the monomers which constitute the water-insoluble water-absorbent resin is, generally 0.01 to 10 %, preferably 0.1 to 5 %. It is preferable that the ratio be 0.01 % or more to ensure that the gel strength at the time of water absorption will not lower, nor form a sol, consequently not providing stringiness. It is further preferable since it provides dispersion stability of active material. Further, it is preferable that the ratio be 10 weight % or less to ensure that the gel strength will not become so great as to diminish its property of increasing the viscosity of the paste.

The weight ratio of vinyl monomers excluding the above mentioned vinyl monomers, namely the above mentioned "other vinyl monomers" based to the total monomers which constitute the water-insoluble water-absorbent resin is, generally 30 % or less, preferably 10 % or less.

By further crosslinking with a compound having at least two groups reactive with a functional group of the water-insoluble water-absorbent resin, a water-insoluble water-absorbent resin having a higher gel strength and property for increasing the viscosity and dispersion stability of an active material can be produced.

Examples of such compounds include compounds having at least two groups reactive with a carboxylic acid salt group, such as an epoxy group, a hydroxyl group, an isocyanate group and a quaternary ammonium salt group, and polyvalent metal compounds capable of forming an ion crosslinking.

Examples of such compounds include polyepoxy or polyglycidyl ether compounds such as ethylene glycol diglycidyl ether, propylene glycol diglycidyl ether, glycerol-1,3-diglycidyl ether, polyethylene glycol diglycidyl ether and bisphenol A-epichlorohydrin type epoxy resins; polyols such as glycerol, ethylene glycol and propylene glycol; and (poly)alkylene polyamines such as ethylene diamine.

Examples of polyvalent metal compounds include compounds capable of forming an ion crosslinking, for instance alkaline earth metals such as calcium and magnesium, hydroxides of zinc, aluminum or titanium, halogen compounds of the above mentioned metals, and salts of the above mentioned metals such as sulfates, carbonates and acetates. Specifically, calcium hydroxide, zinc acetate and aluminum sulfate are included.

Among these examples, polyglycidyl ether compounds and polyvalent metal compounds are preferable.

The water-insoluble water-absorbent resins used in the present invention have the shape of fine powders having an average particle size of 200 µm or smaller. Fine powders having an average particle size of 100 µm or smaller are more preferable. It is necessary to use fine powders having an average particle size of 200 µm or smaller since the swelled particles of the resin after absorption of water will not become too large, with a preferable viscosity of the paste facilitating application onto a porous metal substrate.

The viscosity of the water-insoluble water-absorbent resins of the present invention is 20,000 cps or more when determined for an aqueous dispersion of water-insoluble water-absorbent resin with 1 weight % concentration at 30 °C.

Since an active material having a large specific gravity can then be uniformly maintained in a dispersed state. Further, it is preferable that the upper limit of the above mentioned viscosity of water-insoluble water-absorbent resins is 100,000 cps or less, to facilitate preparation and adjustment of the paste.

The thickeners used in the present invention may include further thickeners, if required. Examples of such further thickeners include water-soluble polymers such as carboxy methyl cellulose (CMC), polyvinyl alcohol and sodium polyacrylate. Their percentage content based on total thickeners is 30 weight % or less.

Such thickeners can be used for any electrode paste for alkaline storage batteries, for which water-soluble polymers have been used conventionally. In particular, among alkaline storage batteries, the thickeners are preferably used for a nickel-cadmium battery or a nickel-hydrogen battery.

The process of forming an electrode by using a thickener as proposed by the present invention is not particularly limited as long as a thickener proposed by the present invention is used in place of a conventional water-soluble polymer. That is, an aqueous solution of a water-soluble polymer is to be replaced by an aqueous dispersion of a water-insoluble water-absorbent resin of the present invention. However, the amount of a thickener used in accordance with the present invention can be less than that of a water-soluble polymer. Specifically, the amount of a thickener based on the water content in the paste is, generally 0.1 to 2.0 weight %, preferably 0.2 to 1.0 weight %. The viscosity of the paste including materials such as an active material and a conductive agent is, generally 10,000 to 40,000 cps. By having 0.1 weight % or more of a water-insoluble water-absorbent resin, sedimentation of an active material in the paste is prevented to facilitate the uniform application to a metal porous substrate. Further, sagging of the paste after application to the metal porous substrate is also prevented. It is also preferable to have 2.0 weight % or less of a water-insoluble water-absorbent resin, since fluidity of the paste is preferably maintained to facilitate the applicability to the metal porous substrate.

It is preferable to have high percentage of an active material in the paste of the present invention with respect to battery performance. However, if too much is present, the applicability and adhesion to the metal porous substrate is diminished. Generally, the amount is 200 to 300 weight parts to 100 weight parts of an aqueous dispersion of a thickener.

A porous metal substrate, which is a part of an electrode material of an alkaline storage battery, is not particularly critical in construction and conventional materials employed for the purpose can be used. Examples of porous metal substrates include porous metal substrates with two-dimentional structure such as a metal net of nickel as the main component; and metal substrates produced by forming holes in a metal plate of nickel as the main component by punching (They are generally called "punched metal"); porous metal substrates with three-dimentional structure such as a formed metal, including those prepared by plating a polyurethan foam with nickel, followed by burning and eliminating the polyurethane component leaving a porous structure of nickel; and metal fiber nets such as those prepared by applying nickel-plating on a net formed from fibers.

To make an electrode, compositions for preparing electrode paste for an alkaline storage battery according to the present invention are mixed with water to form a paste and then applied to metal porous substrates such as described above, dried and pressure-molded. The temperature of the drying is not particularly limited, but is in general 100 to 200 °C.

A composition for preparing an electrode paste for an alkaline storage battery contains an active material, a conductive agent, a fluorine resin and a thickener. In particular, it is characteristic of the present invention that a water-insoluble water-absorbent resin is used as a thickener. Thickeners contribute to thickening a paste for an electrode and to affixing an active material and a conductive agent to a metal porous substrate after drying and solidification of the paste. However, they also contribute to a diminishing of the electric characteristics of the battery: therefore, to that extent, it is desirable to limit the less amount of thickener. Since water-insoluble water-absorbent resins are used as a thickener in the present invention, a reduced amount can be sufficient to provide the effects compared with the case where water-soluble resins are used as a thickener.

The proportions of active material, conductive agent, fluorine resin and thickener are generally, based on 100 weight parts of an active material; 0.05 to 7 weight parts, preferably 0.1 to 5 weight parts, of a conductive agent; 0.2 to 10 weight parts, preferably 0.5 to 7 weight parts, of a fluorine resin; and 0.01 to 2 weight parts, preferably 0.05 to 1 weight part of a thickener. In order to make a paste, a further 1 to 200 weight parts, preferably 5 to 100 weight parts, of water is added thereto. Then the paste is applied to the above mentioned metal porous substrates as a paste of the present invention.

Different kinds of active materials are used depending on whether a positive electrode or negative electrode is concerned. Examples of active materials for the positive electrode include nickel hydroxide powders. Examples of active materials for the negative electrode include cadmium powders and hydrogen-storing alloy powders. Hydrogen-storing alloys reversibly store hydrogen in an alkaline electrolyte by an electro-chemical reaction and are well known as an active material for the negative electrode for an alkaline storage battery. Examples of hydrogen-storing alloys include LmNi_{4.2}Co_{0.2}Mn_{0.3}Al_{0.3} (Lm herein denotes La enriched misch metal.), La_{0.8}Nd_{0.2}Ni_{2.5}Co_{2.4}Al_{0.1}, La_{0.8}Nd_{0.15}Zr_{0.03}Ni_{3.8}Co_{0.7}Al_{0.5}, MmNi_{3.65}Co_{0.75}Mn_{0.4}Al_{0.3} (Mm herein denotes misch metal), MmNi_{2.5}Co_{0.7}Al_{0.8}, Mm_{0.85}Zr_{0.15}Ni_{1.0}Al_{0.8}V_{0.2}, ZrV_{0.41}Ni_{1.6}, ZrMn_{0.6}Cr_{0.2}Ni_{1.2}, TiNi-Ti₂Ni and TiNi-Zr₁Ni₁₀. Misch metal comprises a mixture of rare earth metals such as La, Ce and Nd.

Examples of conductive agents include materials used as conductive agents for an electrode paste, such as carbon black powders, nickel powders and cobalt powders.

Fluorine resins are used as a binder to firmly affix an active material. Examples of fluorine resins include polytetrafluoroethylene, tetrafluoroethylene-hexafluoropropylene copolymers, and a combination of these fluorine resins and thermoplastic resins such as polyvinyl alcohol, styrene-butadiene copolymers and styrene-isopropylene copolymers.

The present invention will be further explained with reference to Examples hereinafter, but the invention is not limited to these embodiments. "Part" and "%" in Examples and Comparative Examples denote "weight part" and "weight %", respectively. Viscosity of a water-insoluble water-absorbent resin or a water-soluble polymer was measured in the method described below.
Viscosity measuring method : A uniform water-absorbent gel is prepared by adding 1 part of a water-insoluble water-absorbent resin or a water-soluble polymer to 99 parts of deionized water. Viscosity is measured with a B-type viscometer (6 rpm) with the temperature of the gel maintained at 30 °C.

### Example 1

34 parts of sodium acrylate, 28 parts of acrylic acid, 0.5 part of N,N'-methylene bisacrylamide and 400 parts of water were placed in an openable sealed container. After adjusting the liquid temperature to 20 °C in nitrogen atmosphere, 1 part of an aqueous solution of ammonium persulfate having 0.5 % concentration and 1 part of an aqueous solution of sodium hydrogensulfite having 0.5 % concentration were added for polymerization to form a gel with heat generation. After six hours from starting the polymerization, the obtained crosslinked gel polymer containing water was taken out. The crosslinked gel polymer was cut finely by kneading for approximately two hours with a kneader, and drawn on a drum drier which was pre-heated to 160 °C to dry, then pulverized to obtain a water-insoluble water-absorbent resin (A) having an average particle size of 35 µm. The viscosity of the water-insoluble water-absorbent resin (A) obtained was 31,000 cps, and it was a thickener used in the present invention.

### Example 2

Example 1 was repeated except that the 0.5 part of N,N'-methylene bisacrylamide was replaced with 0.8 part of trimethylolpropane triacrylate. A water-insoluble water-absorbent resin (B) was obtained. The average particle size of the water-insoluble water-absorbent resin (B) was 35 µm and the viscosity thereof was 38,000 cps, and it was a thickener used in the present invention.

### Example 3

100 parts of acrylic acid, 0.5 part of tetra allyloxyethane and 400 parts of water were placed in an openable sealed container. After adjusting the liquid temperature to 10 °C in nitrogen atmosphere, 1 part of an aqueous solution of hydrogen peroxide having 1 % concentration and 1 part of an aqueous solution of ascorbic acid having 0.5 % concentration were added for polymerization to form a gel with heat generation. After six hours from starting the polymerization, the sealed container was opened to take out the obtained crosslinked gel polymer containing water. After cutting 500 parts of the gel finely, 73.5 parts of an aqueous solution of sodium hydroxide having 50 % concentration was added thereto for neutralization, then further kneaded uniformly to convert approximately 75 mole % of polyacrylic acid in the polymer to sodium polyacrylate. The neutralized gel was dried with a drum drier which was pre-heated to 160 °C, then pulverized to obtain a water-insoluble water-absorbent resin (C) having an average particle size of 35 µm. The viscosity of the obtained water-insoluble water-absorbent resin (C) was 55,000 cps, and it was a thickener used in the present invention.

### Example 4

The neutralized gel of Example 3 was pulverized immediately after neutralizing to obtain a water-insoluble water-absorbent resin (D) having an average particle size of 250 µm. The viscosity of the obtained water-insoluble water-absorbent resin (D) was 57,000 cps, and it was a thickener of the present invention.

### Example 5

After adding 300 parts of water to 100 parts of the water-insoluble water-absorbent resin obtained in Example 2 to uniformly absorb water, 2 parts of glycerol was added and uniformly kneaded. The water-absorbent gel was dried with hot air at 160 °C, and pulverized to obtain a water-insoluble water-absorbent resin (E) having the average particle size of 35 µm. The viscosity of the obtained water-insoluble water-absorbent resin (E) was 16,000 cps, and it was a thickener used in the present invention.

### Comparative Example 1

A water-soluble polymer, CMC (carboxymethyl cellulose) commercially available as "CMC DAICEL 1160" (Tradename) produced by DAICEL CHEMICAL INDUSTRIES, LTD. was used as a thickener (F). The average particle size thereof was 200 µm or less, and the viscosity was 500 cps.

### Comparative Example 2

A mixture of CMC (carboxymethyl cellulose) "CMC DAICEL 1160" (Tradename) and sodium polyacrylate commercially available as "ARONBIS-S" produced by NIHON JUNYAKU, CO., LTD. in the weight ratio of 5 to 1 was used as a thickener (G). The average particle size thereof was 200 µm or less, and the viscosity was 450 cps.

### Example and Comparative Example concerning electrode paste

Thickeners used in the present invention, namely, the water-insoluble water-absorbent resins (A), (B), (C), (D) and (E) obtained in Examples 1 to 5 and thickeners obtained in Comparative Examples 1 and 2 were evaluated by making electrode pastes. Evaluation was conducted by the following procedure : 250 parts of hydrogen-storing alloy powders (200 mesh pass) of LmNi_{4.2}Co_{0.2}Mn_{0.3}Al_{0.3} (Lm denotes La enriched misch metal.), a thickener in a predetermined amount, 3.8 parts of polytetrafluoroethylene (PTFE), 2.5 parts of carbon black and 100 parts of water were kneaded and mixed to adjust the paste. The kinds and amounts of thickeners are described in Table 1.

Each paste was applied to the both side surfaces of a punched-metal substrate having 1 mm thickness and 2.0 mm hole diameter with 50 % rate of hole area, by soaking the substrate in a paste placed in a container, lifting vertically, then passing through a slit to remove surplus paste. Then the substrate was dried at 150 °C for 20 minutes followed by rolling with a roller press.

Efficiency of thickening (in preparing a paste), sagging of paste, and ease of applicability of a paste were examined. Further, fallout property of the active material after soaking the substrate in 35 % aqueous solution of potassium hydroxide and leaving at 60 °C for one week was also examined.

### 〈Evaluation standard〉

① Efficiency of thickening (in preparing a paste)
   ○ : Undissolved powder lumps are seldom formed and the paste thickens uniformly in a short time.
   × : Undissolved powder lumps are often formed and a long time is needed for uniform thickening.
② Sagging of a paste
   ○ : Paste does not sag when left in the vertical position after applying to the substrate.
   △ : Paste sags a little when left in the vertical position after applying to the substrate.
   × : Paste sags when left in the vertical position after applying to the substrate.
③ Applicability of a paste
   ○ : Paste can be applied to a predetermined thickness after passing through the slit.
   △ : Paste can with difficulty be applied to a predetermined thickness after passing through the slit.
   × : Paste can not be applied to a predetermined thickness after passing through the slit.
④ Fallout property of an active material after application
   ○ : Active material does not fall out.
   △ : Active material falls out a little.
   × : Active material falls out considerably.

**Table 1**

| | Kind of thickener | Amount (part) of thickener | efficiency of thickening | sagging of paste | applicatility of paste | fallout property after application |
|---|---|---|---|---|---|---|
| 1 | A | 0.50 | ○ | ○ | ○ | ○ |
| 2 | B | 0.50 | ○ | ○ | ○ | ○ |
| 3 | C | 0.50 | ○ | ○ | ○ | ○ |
| 4 | D | 0.50 | ○ | ○ | △ | △ |
| 5 | E | 0.50 | ○ | △ | ○ | ○ |
| 6 | F | 0.50 | × | × | × | × |
| 7 | F | 2.00 | × | △ | △ | △ |
| 8 | G | 2.00 | × | △ | △ | △ |

From the evaluation results reported in Table 1, it can be seen that an electrode for an alkaline storage battery produced with a thickener in accordance with the present invention is superior to conventional water-soluble polymers since it has better efficiency of thickening, is not liable to sag even with a little amount of adding, and has better applicability of paste without liability of fallout of active material.

By using such a thickener in production of an electrode paste for an alkaline storage battery, the following advantageous effects can be achieved.
(1) In the thickening stage, undissolved powder lumps are seldom formed and the paste can be gelled uniformly in a short time.
(2) Thickening effect can be realized by adding an amount less than that of conventional water-soluble polymers to prevent sagging of the paste.
(3) Owing to the absence of stringiness, good operativity in application to a porous metal substrate can be provided.
(4) Since thickener does not elute from the obtained electrode even after contacting with elecrolyte (strong alkaline solution) and the entire surface of an active material can hardly be covered with a thickener, the activity of the active material can be maintained for a long time and fallout of active material seldom occurs.

Since thickeners used in the present invention have the advantageous effects heretofore mentioned, they can be applied preferably in production of paste used for a positive electrode such as a nickel positive electrode, or a negative electrode such as a cadmium negative electrode and a hydrogen-storing alloy negative electrode of alkaline storage batteries such as nickel-cadmium batteries and nickel-hydrogen batteries. Since paste for an alkaline storage battery including the thickener has the above mentioned advantageous effects, it is useful as a paste for electrode of an alkaline storage battery.

## Claims

1. Use as a thickener for an electrode paste for an alkaline storage battery of a water-insoluble water-absorbent resin in the form of a fine powder having an average particle size of 200 µm or less and a viscosity, determined on an aqueous dispersion of 1 weight % concentration at 30°C, of at least 20,000 cps.

2. Use according to claim 1 wherein said viscosity is from 20,000 to 100,000 cps.

3. Use according to claim 1 or claim 2 wherein the resin has neutralized carboxylic groups.

4. Use according to claim 3 wherein the proportion of monomers having a neutralized carboxylic group with respect to the total monomers comprising the resin is at least 40 mole %.

5. Use according to claim 4 wherein said proportion is from 50 to 80 mole %.

6. A composition for an electrode paste for an alkaline storage battery, comprising an active material; a conductive agent; fluorine resin; and a thickener comprising a water-insoluble water-absorbent resin in the form of a fine powder having an average particle size of 200 µm or less and a viscosity, determined on an aqueous dispersion of 1 weight % concentration at 30°C, of at least 20,000 cps.

7. A composition according to claim 6 wherein said viscosity is from 20,000 to 100,000 cps.

8. A composition according to claim 6 or claim 7 wherein the resin has neutralized carboxylic groups.

9. A composition according to claim 8 wherein the proportion of monomers having a neutralized carboxylic group with respect to the total monomers comprising the resin is at least 40 mole %.

10. A composition according to claim 9 wherein said proportion is from 50 to 80 mole %.

11. A composition according to any of claims 6 to 10 wherein the proportions of conductive agent, fluorine resin and thickener, based on 100 parts of an active material, are: 0.05 to 7 weight parts of conductive agent, 0.2 to 10 weight parts of fluorine resin and 0.01 to 2 weight parts of the thickener.

12. An electrode paste for an alkaline storage battery comprising a composition according to any one of claims 6 to 11 mixed with water.

13. An electrode paste according to claim 12 wherein the proportion of water based on 100 weight parts of an active material is 1 to 200 weight parts, and the proportion of a thickener with respect to water is from 0.1 to 2.0 weight %, preferably from 0.1 to 1.0 weight %.

14. An electrode paste according to claim 12 or claim 13 having a viscosity of 10,000 cps to 40,000 cps.

15. An electrode paste according to any one of claims 12 to 15 which is applied on a porous substrate which is a part of an electrode material of the alkaline storage battery.

## Patentansprüche

1. Verwendung eines wasserunlöslichen, wasserabsorbierenden Harzes in Form eines feinen Pulvers mit einer mittleren Teilchengröße von 200 µm oder weniger und einer Viskosität, die bei einer wäßrigen Dispersion mit einer Konzentration von 1 Gew.-% bei 30°C bestimmt wurde, von mindestens 20.000 cp als Verdickungsmittel für eine Elektrodenpaste für eine alkalische Akkumulatorenbatterie.

2. Verwendung nach Anspruch 1, wobei die Viskosität 20.000 bis 100.000 cp beträgt.

3. Verwendung nach Anspruch 1 oder 2, wobei das Harz neutralisierte Carboxylgruppen aufweist.

4. Verwendung nach Anspruch 3, wobei der Anteil der Monomere mit neutralisierten Carboxylgruppen bezüglich der gesamten Monomere, die das Harz umfaßt, mindestens 40 Mol.-% beträgt.

5. Verwendung nach Anspruch 4, wobei der Anteil 50 bis 80 Mol.-% beträgt.

6. Zusammensetzung für eine Elektrodenpaste für eine alkalische Akkumulatorenbatterie, die ein aktives Material, ein Leitmittel, ein Fluorharz und ein Verdickungsmittel umfaßt, das ein wasserunlösliches, wasserabsorbierendes Harz in Form eines feinen Pulvers mit einer mittleren Teilchengröße von 200 µm oder weniger und einer Viskosität, die bei einer wäßrigen Dispersion mit einer Konzentration von 1 Gew.-% bei 30°C bestimmt wurde, von mindestens 20.000 cp umfaßt.

7. Zusammensetzung nach Anspruch 6, wobei die Viskosität 20.000 bis 100.000 cp beträgt.

8. Zusammensetzung nach Anspruch 6 oder Anspruch 7, wobei das Harz neutralisierte Carboxylgruppen aufweist.

9. Zusammensetzung nach Anspruch 8, wobei der Anteil der Monomere mit neutralisierten Carboxylgruppen bezüglich der gesamten Monomere, die das Harz umfaßt, mindestens 40 Mol.-% beträgt.

10. Zusammensetzung nach Anspruch 9, wobei der Anteil 50 bis 80 Mol.-% beträgt.

11. Zusammensetzung nach einem der Ansprüche 6 bis 10, wobei die Anteile von Leitmittel, Fluorharz und Verdickungsmittel auf der Basis von 100 Teilen eines aktiven Materials 0,05 bis 7 Gew.-Teile Leitmittel, 0,2 bis 10 Gew.-Teile Fluorharz und 0,01 bis 2 Gew.-Teile Verdickungsmittel betragen.

12. Elektrodenpaste für eine alkalische Akkumulatorenbatterie, die eine Zusammensetzung nach einem der Ansprüche 6 bis 10 vermischt mit Wasser umfaßt.

13. Elektrodenpaste nach Anspruch 12, wobei der Anteil des Wassers bezogen auf 100 Gew.-Teile eines aktiven Materials 1 bis 200 Gew.-Teile beträgt, und der Anteil des Verdickungsmittels auf das Wasser bezogen 0,1 bis 2,0 Gew.-%, vorzugsweise 0,1 bis 1,0 Gew.-% beträgt.

14. Elektrodenpaste nach Anspruch 12 oder 13 mit einer Viskosität von 10.000 bis 40.000 cp.

15. Elektrodenpaste nach einem der Ansprüche 12 bis 15, die auf einen porösen Träger aufgebracht ist, der einen Teil des Elektrodenmaterials der alkalischen Akkumulatorenbatterie darstellt.

## Revendications

1. Utilisation d'un épaississant pour une pâte d'électrode pour un accumulateur alcalin d'une résine absorbant l'eau insoluble dans l'eau sous la forme d'une poudre fine ayant une taille particulaire moyenne de 200 µm ou moins et une viscosité, déterminée sur une dispersion aqueuse d'une concentration de 1% en poids à 30°C, d'au moins 20 000 cpo.

2. Utilisation selon la revendication 1, dans laquelle ladite viscosité est de 20 000 à 100 000 cpo.

3. Utilisation selon la revendication 1 ou la revendication 2, dans laquelle la résine possède des groupes acide carboxylique neutralisés.

4. Utilisation selon la revendication 3, dans laquelle la proportion de monomères possédant un groupe acide carboxylique neutralisé par rapport au total des monomères compris dans la résine est d'au moins 40% en moles.

5. Utilisation selon la revendication 4, dans laquelle ladite proportion est de 50 à 80% en moles.

6. Composition pour une pâte d'électrode pour un accumulateur alcalin, comprenant un matériau actif, un agent conducteur, une résine fluorée et un épaississant comprenant une résine absorbant l'eau insoluble dans l'eau sous la forme d'une poudre fine ayant une taille particulaire moyenne de 200 µm ou moins et une viscosité, déterminée sur une dispersion aqueuse d'une concentration de 1% en poids à 30°C, d'au moins 20 000 cpo.

7. Composition selon la revendication 6, dans laquelle ladite viscosité est de 20 000 à 100 000 cpo.

8. Composition selon la revendication 6 ou la revendication 7, dans laquelle la résine possède des groupes acide carboxylique neutralisés.

9. Composition selon la revendication 8, dans laquelle la proportion de monomères possédant un groupe acide carboxylique neutralisé par rapport au total des monomères compris dans la résine est d'au moins 40% en moles.

10. Composition selon la revendication 9, dans laquelle ladite proportion est de 50 à 80% en moles.

11. Composition selon l'une quelconque des revendications 6 à 10, dans laquelle les proportions d'agent conducteur, de résine fluorée et d'épaississant, sur la base de 100 parties de matériau actif sont : de 0,05 à 7 parties en poids d'agent conducteur, de 0,2 à 10 parties en poids de résine fluorée et de 0,01 à 2 parties en poids d'épaississant.

12. Pâte d'électrode pour un accumulateur alcalin comprenant une composition selon l'une quelconque des revendications 6 à 11 en mélange avec de l'eau.

13. Pâte d'électrode selon la revendication 12, dans laquelle la proportion d'eau sur la base de 100 parties en poids de matériau actif est de 1 à 200 parties en poids et la proportion d'épaississant par rapport à l'eau est de 0,1 à 2,0% en poids, de préférence de 0,1 à 1,0% en poids.

14. Pâte d'électrode selon la revendication 12 ou la revendication 13 ayant une viscosité de 10 000 cpo à 40 000 cpo.

15. Pâte d'électrode selon l'une quelconque des revendications 12 à 15, qui est appliquée sur un substrat poreux, qui fait partie d'un matériau d'électrode d'un accumulateur alcalin.
